(19) Europäisches Patentamt
European Patent Office
Office européen des brevets

(11) Publication number : 0 443 729 A2

# (12) EUROPEAN PATENT APPLICATION

(21) Application number : 91300690.4

(22) Date of filing : 30.01.91

(51) Int. Cl.[5] : C08L 81/02, C08L 77/00, C08L 53/00, // (C08L81/02, 77:00, 53:00), (C08L77/00, 81:02, 53:00), (C08L53/00, 81:02, 77:00)

(30) Priority : 30.01.90 US 472148

(43) Date of publication of application : 28.08.91 Bulletin 91/35

(84) Designated Contracting States : BE DE FR GB

(71) Applicant : Tonen Chemical Corporation
1-1, Tsukiji 4-Chome
Chuo-Ku Tokyo (JP)

(72) Inventor : Akhtar, Sania
c/o Polymer Engineering Center
The University of Akron, Ohio 44325 (US)
Inventor : White, James L.
c/o Polymer Engineering Center
The University of Akron, Ohio 44325 (US)

(74) Representative : Holmes, Michael John et al
Frank B. Dehn & Co. Imperial House 15-19
Kingsway
London WC2B 6UZ (GB)

## (54) High impact strength thermoplastic composition.

(57) A unitary thermoplastic composition comprising (a) a poly (arylene sulfide), (b) a polyamide, and (c) an unsaturated carboxylic acid-modified, hydrogenated conjugated diene/monovinyl aromatic block copolymer, preferably 5-95 weight % of (a), 5-95 weight % of (b) and 5-80 weight of (c). Such a composition shows improved properties such as impact resistance.

EP 0 443 729 A2

# HIGH IMPACT STRENGTH THERMOPLASTIC COMPOSITIONS

The invention relates to high-impact strength poly (arylene sulfide) resin ternary blends. The invention further pertains to high-impact strength polymer blends containing a poly (arylene sulfide) resin, a polyamide and an unsaturated carboxylic acid-modified conjugated diene/monovinyl block copolymer. The invention also relates to such polymer alloys further containing fibers and other reinforcing and filler materials.

Poly (arylene sulfide) is a unique class of materials, produced commercially, that have found applications in a variety of areas. Among them, poly (phenylene sulfides) have high melting points, outstanding chemical resistance, thermal stability and non-flammability. The polymer is characterized by high stiffness and good retention of mechanical properties at elevated temperatures.

For certain thermoplastic applications, alloys of two or more resins may exhibit a better balance of properties. For example, by admixing a resin having certain desirable physical properties with a second and/or third resin having other desirable physical properties, it is hoped to find resin blends that have inherited at least some of the desired physical properties from each of the resins.

As such polymer alloys, polymer alloys of poly (arylene sulfide) with other resins show excellent mechanical properties such as impact strength, and various poly (arylene sulfide)-based polymer alloys have been proposed.

Japanese Patent Laid-Open No. 55-45704 discloses a thermoplastic resin composition comprising 30-97 parts by weight of a poly (arylene sulfide) resin, and 70-3 parts by weight of a low-crystallinity thermoplastic resin selected from polycarbonates, polysulfones, polyamides and polyesters, the composition further containing 3-60 weight % of carbon fibers and/or graphite, and 0-20 weight % of fluorine resins.

U.S. Patent 4,017,555 discloses a polymeric alloy of polyphenylene sulfide having recurring units of the formula :

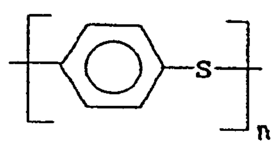

and a polyimide having recurring units of the formula :

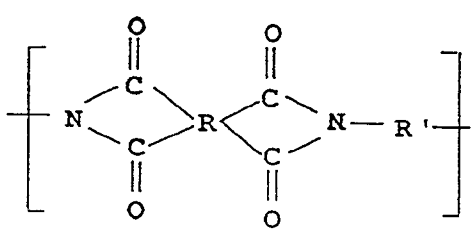

U.S. Patent 4,528,346 discloses a resin composition comprising (A) a polyphenylene sulfide, (B) an epoxy compound, (C) a thermoplastic resin other than (A) in the range of from 230°C to 370°C and (D) optionally a filler.

EP 0,170,065 discloses a composition suitable for use as an insulating material in an electrical device comprising from about 35 to about 65 weight percent of an amorphous polymer selected from a polyarylethersulfone, a polyarylether, a polyetherimide or a polyarylate; and from about 65 to about 35 weight percent of a crystalline polymer selected from a poly (arylene sulfide), a polyester or a polyamide.

However, poly (arylene sulfide) compositions having a better combination of mechanical properties such as tensile strength, impact strength, etc. have been desired.

It is an object of the present invention to provide high-impact. strength polymer alloys containing a poly (arylene sulfide) and certain additional resins.

It is also an object of the present invention to provide poly (arylene sulfide) resin-containing thermoplastic alloys which have better impact resistance than that of poly (arylene sulfide).

Another object of the present invention is to desirably modify one or more physical properties, such as tensile strength, elongation and impact resistance of poly (arylene sulfide).

A principal feature of this invention is that polymeric alloys of poly (arylene sulfide) resins, polyamides and

unsaturated carboxylic acid-modified, hydrogenated conjugated diene/monovinyl aromatic block copolymers are disclosed which possess high temperature resistance characteristics, good mechanical properties and are easily fabricated using conventional thermoplastic processing techniques.

According to one aspect of the present invention there is provided a unitary thermoplastic composition comprising :

(a) poly (arylene sulfide),
(b) a polyamide, and
(c) an unsaturated carboxylic acid-modified, hydrogenated conjugated diene/monovinyl aromatic block copolymer.

The poly (arylene sulfide) resin used in the present invention may be formed from recurring units of the formula :

$$-[ArS]_n-,$$

wherein "-Ar-" is a divalent aromatic group, preferably represented by the following formula :

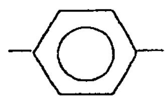
,
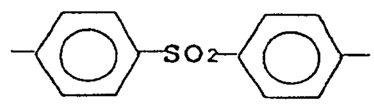
,
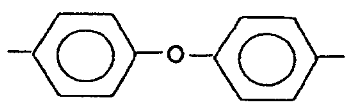
,
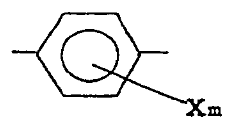
,
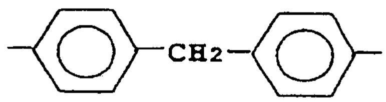
, and
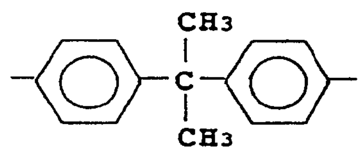

wherein X denotes F, Cl, Br or $CH_3$ and m denotes an integer of 1-4.

An especially typical poly (arylene sulfide) resin is polyphenylene sulfide having a repeating unit represented by the general formula :

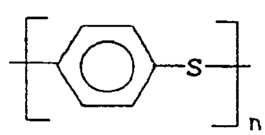

The poly (arylene sulfide) used in the present invention usually has a melt viscosity of 20-30,000 poise, preferably 100-15,000 poise at 300°C when measured by a flow tester ($L/D = 10$, $\gamma = 200\ sec^{-1}$).

By polyamide is meant a condensation product which contains recurring aromatic and/or aliphatic amide groups as integral parts of the main polymer chain, such products being known generically as "nylons." These may be obtained by polymerizing a monoamino-monocarboxylic acid or an internal lactam thereof having at least two carbon atoms between the amino and carboxylic acid groups, or by polymerizing substantially equimolar proportions of a diamine and a dicarboxylic acid. The dicarboxylic acid may be used in the form of a functional derivative thereof, for example, an ester.

The term "substantially equimolar proportions" (of the diamine and of the dicarboxylic acid) is used to cover both strict equimolar proportions and the slight departures therefrom which are involved in conventional techniques for stabilizing the viscosity of the resultant polyamides.

As examples of the monoamino-monocarboxylic acids or lactams, there may be mentioned those compounds containing from 2 to 16 carbon atoms between the amino and carboxylic acid groups, said carbon atoms forming a ring with the -CO-NH- group in the case of a lactam. As particular examples of amino-carboxylic acids and lactams there may be mentioned ε-aminocaproic acid, butyrolactam, pivalo-lactam, caprolactam, capryllactam, enantholactam, undecanolactam, dodecanolactam and 3- and 4-amino benzoic acids.

Examples of the diamines are diamines of the general formula $H_2N(CH_2)_nNH_2$ wherein n is an integer of from 2 to 16, such as trimethylenediamine, tetramethylenediamine, pentamethylenediamine, octamethylenediamine, decamethylenediamine, dodecamethylenediamine, hexadecamethylenediamine, and especially hexamethylenediamine.

C-alkylated diamines, e.g. 2,2-dimethylpentamethylenediamine and 2,2,4- and 2,4,4-trimethylhexamethylenediamine, are further examples. Other diamines which may be mentioned as examples are aromatic diamines, e.g. p-phenylenediamine, 4,4′-diaminodiphenyl sulfone, 4,4′-diaminodiphenyl ether and 4,4′-diaminodiphenylmethane and cycloaliphatic diamines, for example, diaminodicyclo-hexylmethane.

Specifically, the following polyamides may be incorporated in the thermoplastic polymer blends of the invention :

Polyhexamethylene adipamide (nylon 6 : 6),
Polypyrrolidone (nylon 4),
Polycaprolactam (nylon 6),
Polyheptolactam (nylon 7),
Polycapryllactam (nylon 8),
Polynonanolactam (nylon 9),
Polyundecanolactam (nylon 11 ),
Polydodecanolactam (nylon 12),
Polyhexamethylene azelaiamide (nylon 6 : 9),
Polyhexamethylene sebacamide (nylon 6 : 10),
Polyamide of hexamethylenediamine and n-dodecanedioic acid (nylon 6 : 12), and
Polyamide of dodecamethylene diamine and n-dodecanedioic acid (nylon 12 : 12).

Nylon copolymers may also be used, for example, copolymers of the following :

Hexamethylene adipamide/caprolactam (nylon 6 : 6/6),
Trimethylhexamethylene oxamide/hexamethylene oxamide/nylon 6 : 2/6 : 2),
Hexamethylene adipamide/hexamethylene-azelaiamide (nylon 6 : 6/6 : 9), and
Hexamethylene adipamide/hexamethylene-azelaiamide/ caprolactam (nylon 6 : 6/6 : 9/6).

The polyamides which may be used in our invention generally have a relative viscosity ($\eta_r$) of 1.0 or more, preferably 0.2 or more.

Preferred nylons include nylon 6, 6/6, 11, 12, 6/3 and 6/12.

The conjugated diene/monovinyl aromatic block copolymer useful in this invention to modify physical properties in the arylene sulfide compositions includes those described in U.S. Patent 3,595,942, U.S. Patent 3,639,517 and U.S. Patent 4,091,053, which are incorporated by reference herein. These references describe the block copolymer as being produced by the sequential polymerization of monovinyl-substituted aromatic hydrocarbons and conjugated dienes with the monomer ratio in a range of about 10 to 90 parts by weight conjugated diene to 90 to 10 parts by weight monovinyl aromatic. The preferred monomer ratio is about 10 to 50 parts by weight conjugated diene to 50 to 10 parts by weight monovinyl aromatic. Multiple additions of initiators and monovinyl-substituted aromatic monomer with subsequent treatment with a polyfunctional treating agent form resinous branched block copolymers which are polymodal in regard to molecular weight distribution. The copolymers preferably have a weight-average molecular weight in the range of 50,000 to 300,000.

The polymers useful in this invention are then hydrogenated to provide block copolymers in which at least 80 percent, preferably 85 percent, of the aliphatic double bonds have been hydrogenated while not more than 25 percent of the aromatic double bonds have been hydrogenated. Most preferably about 99 percent of the aliphatic double bonds have been hydrogenated while less than 5 percent of the aromatic double bonds have been hydrogenated. Such hydrogenation is well known in the art in typical hydrogenation procedure described in U.S. Patent 4,088,626, which is incorporated by reference herein. The block copolymers are then modified with unsaturated carboxylic acids.

The unsaturated carboxylic acid-modified, hydrogenated conjugated diene/monovinyl aromatic block copolymers which may be used in the present invention mean hydrogenated conjugated diene/monovinyl aromatic block copolymers modified with unsaturated carboxylic acids or their anhydrides. The unsaturated carboxylic acids or their anhydrides include monocarboxylic acids such as acrylic acid, methacrylic acid, etc.; dicarboxylic acids such as maleic acid, endomethylenetetrahydrophthalic acid, fumaric acid, itaconic acid, etc.; dicarboxylic anhydrides such as maleic anhydride, endomethylenetetrahydrophthalic anhydride, itaconic anhydride, etc., and particularly dicarboxylic acids or their anhydrides are preferable. Particularly preferred is maleic acid or its anhydride.

The contents of the unsaturated carboxylic acids or their anhydrides in the block copolymers are generally 0.1-10 weight % based on the total weights of the block copolymers.

The preferred maleinated hydrogenated conjugated diene/monovinyl aromatic block copolymers (maleic

acid-modified, hydrogenated conjugated diene/monovinyl aromatic block copolymers) are maleic acid-modified isoprene/styrene block copolymers or butadiene/styrene block copolymers or ethylene/butylene/styrene block copolymers that can contain up to about 45 percent by weight styrene blocks, preferably from about 10 to about 40 percent by weight styrene blocks. The same is true of the hydrogenated conjugated diene/monovinyl aromatic block copolymers substituted with other unsaturated carboxylic acids or their anhydrides.

The unsaturated carboxylic acid-modified, hydrogenated conjugated diene/monovinyl aromatic block copolymers which may be used in our invention are commercially available as Kraton FX 1901X1 (Shell Chemical), and Toughtec M 1911, M1913, M1943 and M1953 (Asahi Chemical Industry Co., Ltd.).

The blends (alloys) of our invention can be prepared using conventional techniques known in the art for producing unitary compositions from two or more resins. For example, the alloys can be formed by mixing suitable amounts or proportions of the dry powders or pellets of each of the resins by tumbling, followed by further mixing in a suitable compounding device such as an extruder for melt extrusion. The mixing that takes place during conventional injection molding also will suffice to produce the alloys. Other known methods of forming alloys of resins which can be employed include, for example, melt mixing in a laboratory internal mixer. To form the alloys, the temperature has to be at least high enough that the resins employed melt, but the temperature should be kept sufficiently low to ensure that none of the resins will be degraded. The resulting alloys can be granulated or pelletized if desired for convenience in handling or subsequent molding operations.

The amounts of each of the polymers in our polymer alloys can vary over a wide range, depending on desired properties. The ratios of the three polymer components in our alloys should be those which are effective to desirably modify one or more physical properties of the poly (arylene sulfide).

Generally, the polymer alloys will contain about 5 to 95 weight percent, preferably about 10 to 90 weight percent, most preferably 45 to 85 weight percent poly (arylene sulfide), based on the weight of the blend composition excluding other compounding components such as fillers, colorants, and fibers.

The polymer alloys can contain a suggested range of about 5 to 95, preferably 15 to 40 weight percent of the polyamide resin, on the same basis.

The ternary blends can contain about 5 to 80 weight percent, preferably about 10 to 50 weight percent of the unsaturated carboxylic acid-modified hydrogenated conjugated diene/monovinyl block copolymer, on the same basis.

The polymer alloys can also contain reinforcing fibers and/ or fillers, etc. The preferred reinforcing fibers are glass fibers, carbon fibers, etc. The amount of the glass fibers, carbon fibers, etc. may generally be up to 80 weight % based on the total weights of the polymer alloys. The fillers may be talc, mica, potassium titanate, etc. in amounts of up to 80 weight % based on the total weights of the polymer alloys.

The blend compositions can contain additional optional components such as mold corrosion inhibitors, pigments, processing aids and the like.

## Examples

Examples provided are intended to assist in a further understanding of our invention. Particular materials and conditions employed are intended to be further illustrative of our invention.

The examples show that blends of poly (arylene sulfide), polyamide, and unsaturated carboxylic acid-modified, hydrogenated conjugated diene/monovinyl block copolymer improve such properties as tensile strength, elongation to break and impact strength when compared with an alloy containing poly (arylene sulfide) and polyamide.

## Example 1

A series of homogeneous physical blends was prepared by mixing poly (phenylene sulfide) (PPS) powder, having a melting point of 294°C, with a polyamide, nylon 6 (N6) having a specific gravity of 1.13 and a melting point of 216°C, and maleinated hydrogenated conjugated diene/monovinyl block copolymer, maleinated hydrogenated styrene-ethylene-butylene-styrene (MAHSEBS) having a maleic acid content of 2 weight % and a specific gravity of 0.92. The N6 was obtained from Allied Chemical Corporation under the trademark "Capron 8202." The MAHSEBS was obtained from Shell Chemical Company under the trademark "Kraton FX1901X."

The PPS was dried at 120°C for 6 hours in the air while N6 and MAHSEBS were dried for 24 hours at 70°C. The appropriate weight of each polymer was taken and thoroughly mixed. Each blend of polymers was extruded at 295°C from a Werner-Pfleiderer ZSK-30 twin screw extruder to form granules after passing through a pelletizer. Prior to injection molding, the pellets were first dried in air at 100°C for 24 hours and then in vacuum at 120°C for 48 hours. Test specimens of each blend were prepared by injection molding. The results of physical tests on the specimens are presented in Table 1.

Table I

Mechanical Properties of PPS-N6-MAHSEBS Ternary Blends

| Run No. | 1 | 2 | 3 | 4 | 5 | 6 | 7 | 8 | 9 |
|---|---|---|---|---|---|---|---|---|---|
| PPS, Wt % | 100 | 80 | 50 | 50 | 50 | 34 | 50 | 0 | 0 |
| N6, Wt % | 0 | 10 | 40 | 35 | 25 | 33 | 50 | 100 | 0 |
| MAHSEBS, Wt % | 0 | 10 | 10 | 15 | 25 | 33 | 0 | 0 | 100 |
| Tensile strength at yield, MPa (1) | - | 51 | - | - | 32 | 22 | - | 69.5 | - |
| Tensile strength at break, MPa (2) | 65 | 50 | 53 | 47 | 32 | 22 | 29 | 60 | 10 |
| Elongation, % (3) | 5 | 9 | 6 | 7 | 11 | 23 | 2 | 246 | 570 |
| Modulus at 3% elongation, MPa (4) | 1620 | 1012 | 851 | 641 | 651 | 377 | 1450 | 1235 | 165 |
| Izod impact strength (notched), J /M (5) | 36 | 47 | 50 | 73 | 155 | no break | 16 | 36 | no break |

Note (1): ASTM D638

(2): ASTM D638

(3): ASTM D638

(4): ASTM D638

(5): ASTM D256

The data in Table 1 show that the homogeneous ternary blends of PPS, N6 and MAHSEBS (Runs 2, 3, 4, 5 and 6) have higher elongation to break and impact strength than the original PPS (Run 1). It can also be seen that the ternary blend of PPS, N6 and MAHSEBS has higher elongation to break and higher impact strength than the binary blend of PPS and N6 (Run 6 vs. Run 7).

As the data indicate, temary blends of PPS/N6/MAHSEBS show a marked improvement in the physical properties examined. In most cases, the incorporation of MAHSEBS leads to an improvement in the elongation to break and impact strength values.

It is to be understood that the foregoing detailed description is given merely by way of non-limiting illustration.

## Claims

1. A unitary thermoplastic composition comprising :
   (a) poly (arylene sulfide),
   (b) a polyamide, and
   (c) an unsaturated carboxylic acid-modified, hydrogenated conjugated diene/monovinyl aromatic block copolymer.

2. A composition as claimed in claim 1, which is produced by forming an approximately homogeneous mixture of (a), (b) and (c) and then mixing said mixture at a temperature which is sufficiently high to form said unitary composition and sufficiently low to prevent degradation of (a), (b) and (c).

3. A composition as claimed in any one of the preceding claims, wherein said poly (arylene sulfide) accounts for about 5 to 95 weight percent of the resin in the composition.

4. A composition as claimed in any one of the preceding claims comprising :
   (a) 5-95 weight % of a poly (arylene sulfide),
   (b) 5-95 weight % of a polyamide, and
   (c) 5-80 weight % of an unsaturated carboxylic acid-modified, hydrogenated conjugated diene/monovinyl aromatic block copolymer.

5. A composition as claimed in any one of the preceding claims wherein said poly (arylene sulfide) is formed from recurring units of the formula

   -[ArS]-

   wherein Ar is a divalent aromatic group.

6. A composition as claimed in claim 5, whereas Ar is a group chosen from

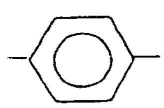
,
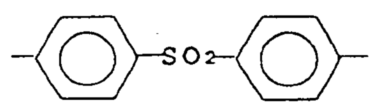
,
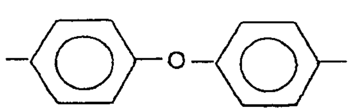
,
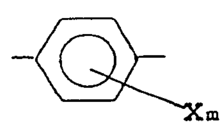
,
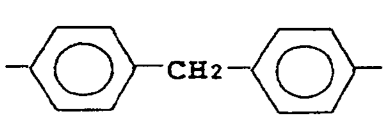
, and
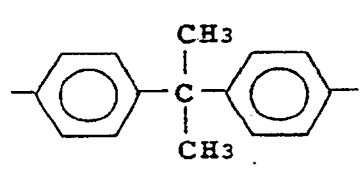
.

   wherein X denotes F, Cl, Br or $CH_3$ and m denotes an integer of 1-4.

**7.** A composition as claimed in any one of the preceding claims wherein said copolymer is a maleic acid-modified isoprene/styrene block copolymer, butadiene/styrene block copolymer or ethylene/butadiene/styrene block copolymer 25 containing up to 45 weight % of styrene blocks.

**8.** A composition as claimed in any one of the preceding claims, further comprising a filler material and/or a reinforcing material.

**9.** A method of producing a unitary thermoplastic composition as claimed in claim 1, said process comprising mixing components (a), (b) and (c) at a temperature which is sufficiently high to cause said components to form a unitary thermoplastic composition and sufficiently low to prevent degradation of said components.

**10.** A moulded article comprising or formed from a unitary thermoplastic composition as claimed in any one of claims 1 to 8.